(19) Europäisches Patentamt
European Patent Office
Office européen des brevets

(11) Publication number: **0 340 753 A2**

(12) **EUROPEAN PATENT APPLICATION**

(21) Application number: **89108020.2**

(51) Int. Cl.4: **C07F 9/09**

(22) Date of filing: **03.05.89**

(30) Priority: **06.05.88 JP 109190/88**
**13.05.88 JP 114537/88**

(43) Date of publication of application:
**08.11.89 Bulletin 89/45**

(84) Designated Contracting States:
**BE DE FR GB IT**

(71) Applicant: **SHOWA DENKO KABUSHIKI KAISHA**
**10-12, Shiba Daimon 2-chome Minato-ku**
**Tokyo(JP)**

(72) Inventor: **Taguchi, Isamu c/o SHOWA DENKI K.K.**
**Kagakuhin Kenkyusho 5-1, Ohgimachi**
**Kawasaki-ku**
**Kawasaki-shi Kanagawa(JP)**
Inventor: **Minami, Seiichirou c/o SHOWA DENKI K.K.**
**Kagakuhin Kenkyusho 5-1, Ohgimachi**
**Kawasaki-ku**
**Kawasaki-shi Kanagawa(JP)**
Inventor: **Terao, Toru c/o SHOWA DENKI K.K.**
**Kagakuhin Kenkyusho 5-1, Ohgimachi**
**Kawasaki-ku**
**Kawasaki-shi Kanagawa(JP)**
Inventor: **Akera, Fumio c/o SHOWA DENKI K.K.**
**Kagakuhin Kenkyusho 5-1, Ohgimachi**
**Kawasaki-ku**
**Kawasaki-shi Kanagawa(JP)**
Inventor: **Shima, Shizuo c/o SHOWA DENKI K.K.**
**Kagakuhin Kenkyusho 5-1, Ohgimachi**
**Kawasaki-ku**
**Kawasaki-shi Kanagawa(JP)**

(74) Representative: **Henkel, Feiler, Hänzel & Partner**
**Möhlstrasse 37**
**D-8000 München 80(DE)**

(54) **Surface treating agent.**

(57) A surface treating agent comprising as an essential ingredient a metal compound represented by the following general formula [I], [II] or [III]:

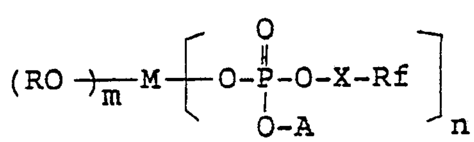

[I]

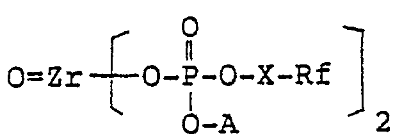

[II]

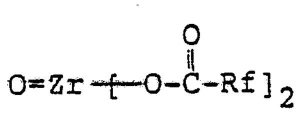

[III]

wherein M represents a metal atom selected from the group consisting of titanium, silicon, aluminum and zirconium;

**EP 0 340 753 A2**

A represents a hydrogen atom,

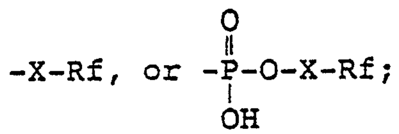

X represents a radical selected from the group consisting of

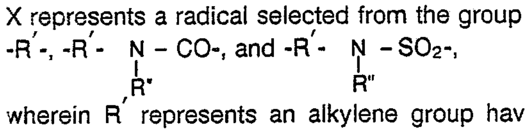

wherein R′ represents an alkylene group having 1 to 8 carbon atoms and R″ represents an alkyl group having 1 to 4 carbon atoms;
Rf represents a perfluoroalkyl group having 4 to 20 carbon atoms;
R represents a radical selected from the group consisting of alkyl groups having 1 to 8 carbon atoms and alkoxy-substituted alkyl groups having 2 to 8 carbon atoms; and
m and n represents integers wherein the sum of m and n corresponds to the valence of the metal M under the condition $1 \leq n \leq M$; or a hydrolyzed condensation product of the above compound; or condensation products of a compound of the formula [I].

# SURFACE TREATING AGENT

## BACKGROUND OF THE INVENTION

### 1. Field of the Invention

The present invention relates to surface treating agents able to provide water-repellent properties, oil-repellent properties, stain resistance, anti-cohesive properties, and lubricating properties, etc., to a surface of a substrate.

### 2. Description of the Related Art

Various coating compositions are used to provide protection, decorative properties, evenness, and insulating properties to a surface of a substrate, by forming a film on that surface. For example, to provide water-repellent properties, oil-repellent properties, stain resistance, anti-cohesive properties, and lubricating properties to a surface of an organic or inorganic substrate, a fluoroplastics-film formation process using a low energy property characteristic to fluorocompounds, coating fluorin-containing oil, and the like, are used.

Nevertheless, since fluoroplastics have a poor adhesion to inorganic materials such as metals, glass, cement, and the like, as well as organic materials such as plastics, wood and the like, when forming a film on the surface of these materials, a special pretreatment of the surface of these materials, such as texture processing, anchor coating, etc., must be carried out.

Although coating a fluorine-containing oil first provides good properties, in the long term the oil seeps from the coated surface, and the desired effects are lost. Moreover, due to a low surface energy, the fluorine-containing oil sometimes appears at a portion of the surface not intended to be coated, resulting in unforeseen obstacles.

Japanese Unexamined Patent Publication No. 57-3417 discloses a two-liquid type fluorine-containing coating composition comprising a fluorine-containing polymer having hydroxyl groups obtained by a copolymerization of fluoroolefin and hydroxyalkylvinyl ether as a main ingredient, and polyvarent isocyanate or methylol melamine as a curing agent. Although this coating composition exhibits excellent film-forming properties, the adhesion thereof to various substrates is not satisfactory. Moreover, because it is a two-liquid type or in situ reaction type, the use thereof is cumbersome.

U.S. Patent applications No. 3,478,088 and No. 3,544,288 disclose metal fluorocarbyl phosphate compounds and the use thereof as an additive for gasoline or other fuels; Japanese Unexamined Patent Publication No. 52-42546 (U.S.P. 4,112,062), Japanese Unexamined Patent Publication No. 52-104541 (U.S.P. 4,069,192), and Japanese Unexamined Patent Publication No. 52-12134 disclose titanates of alkyl phosphate as titanium coupling agents; Japanese Unexamined Patent Publications No. 57-50726 and No. 57-66315 disclose phosphate-containing titanate esters as titanium coupling agents; and Japanese Unexamined Patent Publication No. 59-79427 discloses another phosphate-containing titanate as a titanium coupling agent.

## SUMMARY OF THE INVENTION

The present invention provides surface treating compositions composed of a one-liquid type or all in one type fluorine-containing metal compound, which compositions have a good adhesion to both inorganic and organic materials.

More specifically, the present invention provides a surface treating agent comprising as an essential ingredient a metal compound represented by the following general formula [I], [II], [III], [A], [B], [C] or [D]:

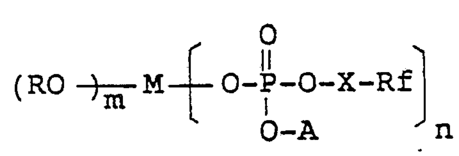

[I]

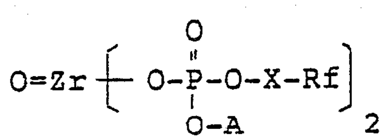

[II]

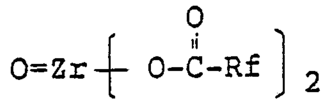

[III]

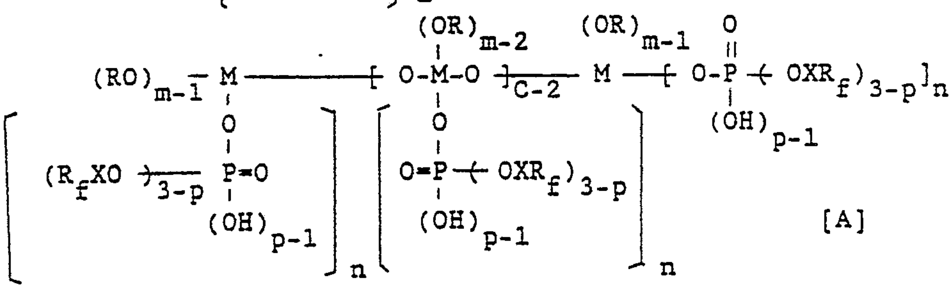

[A]

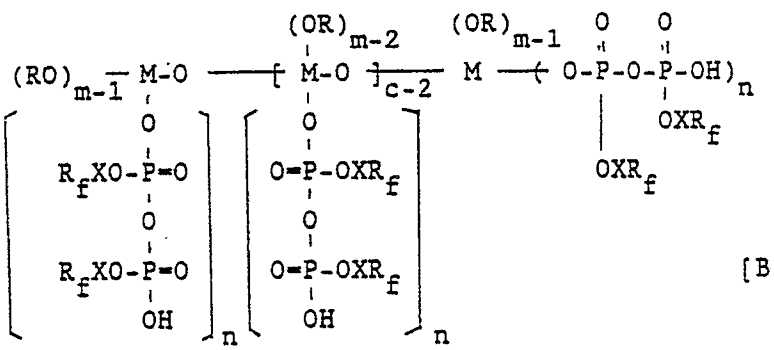

[B]

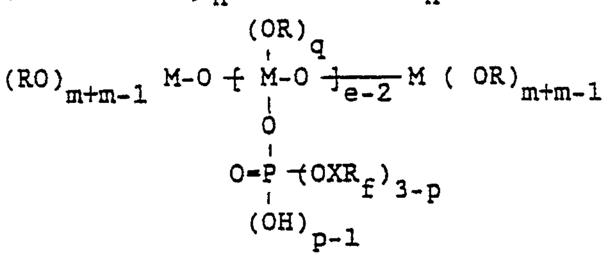

[C]

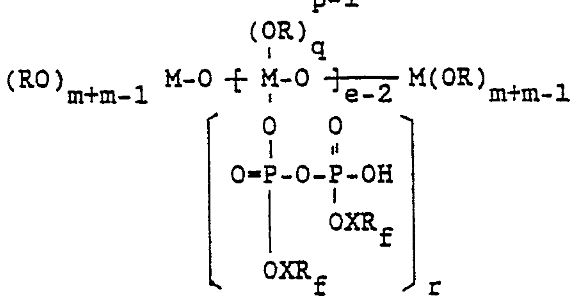

[D]

wherein M represents a metal atom selected from the group consisting of titanium, silicon, aluminum and zirconium;

A represents a hydrogen atom,

-X-Rf, or 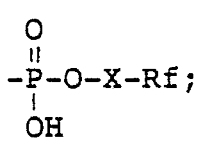 ;

X represents a radical selected from the group consisting of

$-R'-$, $-R'-N(R'')-CO-$ and $-R'-N(R'')-SO_2-$,

wherein $R'$ represents an alkylene group having 1 to 8 carbon atoms and $R''$ represents an alkyl group having 1 to 4 carbon atoms;

Rf represents a perfluoroalkyl group having 4 to 20 carbon atoms;

R represents a radical selected from the group consisting of alkyl groups having 1 to 8 carbon atoms and alkoxy-substituted alkyl groups having 2 to 8 carbon atoms;

m, and n represent integers, wherein the sum of m and n corresponds to the valence of the metal M under the condition $1 \leq n \leq M$;

p is an integer of 1 or 2;

c and e are selected according to an extent of condensation to provide a molecular weight of not more than 10,000;

g is an integer between 0 and m+m-2; and

$q+r = m+n-2$.

## DESCRIPTION OF THE PREFERRED EMBODIMENTS

According to the present invention, the surface treating agent comprises at least one of fluorine-containing metal compounds and condensation products thereof. The fluorine-containing metal compounds can be classified into seven groups having the above-mentioned general formula.

According to the first embodiment, the present compounds are represented by the following formula [I]:

$$(RO \rightarrow_{m} M \,[\!-O-\overset{O}{\overset{\|}{P}}(OA)-O-X-Rf\,]_{n}.$$

In this formula, M represents a metal atom selected from the group consisting of titanium, silicon, aluminum and zirconium;

R represents an alkyl having 1 to 8 carbon atoms or an alkoxy-substituted alkyl having 2 to 8 carbon atoms;

X represents the group

$-R'-$, $-R'-N(R'')CO-$, or $-R'-N(R'')SO_2-$,

wherein $R'$ represents an alkylene group having 1 to 8 carbon atoms, and $R''$ represents a hydrogen atom or an alkyl group having 1 to 4 carbon atoms;

Rf represents a perfluoroalkyl group having 4 to 20 carbon atoms;

A represents a hydrogen atom, the group -X-Rf, or the group

$$-\overset{O}{\overset{\|}{P}}(OH)-O-X-Rf$$

wherein X and Rf have the same meaning as described above; and

the sum of m and n corresponds to the valence of the metal atom M under the condition $1 \leq n \leq M$.

More specifically, R as an alkyl group having 1 to 8 carbon atoms and an alkoxy-substituted alkyl having 2 to 8 carbon atoms includes the following groups:

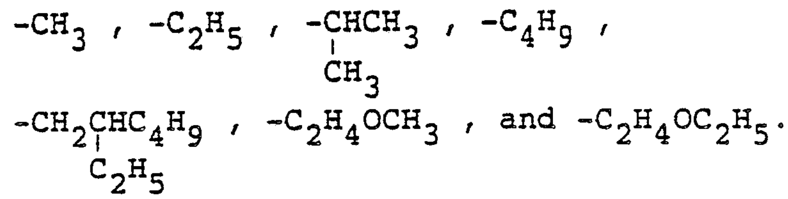

$-CH_3$, $-C_2H_5$, $-C_4H_9$, $-C_2H_4OCH_3$, and $-C_2H_4OC_2H_5$.

Rf can be represented by the formula:

$-C_{\ell}F_{2\ell+1}$

wherein $\ell$ represents an integer of 4 to 20. Rf includes, for example, groups represented by the following formulae:

$-C_4F_9$, $-C_5F_{11}$, $-C_6F_{13}$, $-C_7F_{15}$, $-C_8F_{17}$, $-C_9F_{19}$, $-C_{10}F_{21}$, $-C_{11}F_{23}$, $-C_{12}F_{25}$, $-C_{13}F_{27}$, $-C_{16}F_{33}$, $-C_{17}F_{35}$, $-C_{18}F_{37}$, $-C_{19}F_{39}$, $-C_{20}F_{41}$,

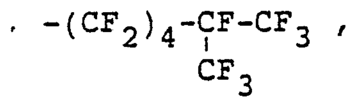

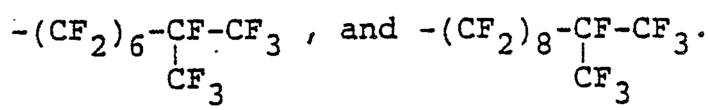

and

R′ as an alkylen group is $-CH_2-$, $-C_2H_4-$, $-C_3H_6-$, $-C_4H_8-$, or $-C_6H_{12}-$; and R″ as an alkyl group is, for example, $-C_2H_5$, $-C_3H_7$, or $-C_4H_9$. Accordingly, the group

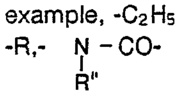

as X is, for example,

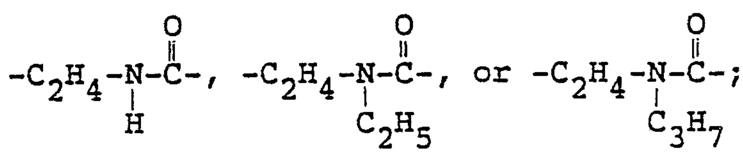

or

and the group

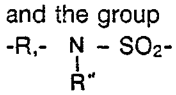

as X is, for example,

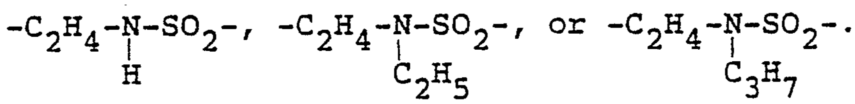

or

Accordingly, the group -X-Rf includes, for example, the following groups:

$-CH_2C_4F_9$, $-C_2H_4C_4F_9$, $-CH_2C_6F_{13}$, $-C_2H_4C_6F_{13}$, $-C_2H_4C_8F_{17}$, $-C_2H_4C_{10}F_{21}$, $-C_2H_4C_{12}F_{25}$, $-C_2H_4C_{14}F_{29}$, $-C_2H_4C_{16}F_{33}$, $-C_2H_4C_{18}F_{37}$, $-C_2H_4C_{20}F_{21}$, $-C_4H_8C_8F_{17}$, $-C_6H_{12}C_8F_{17}$,

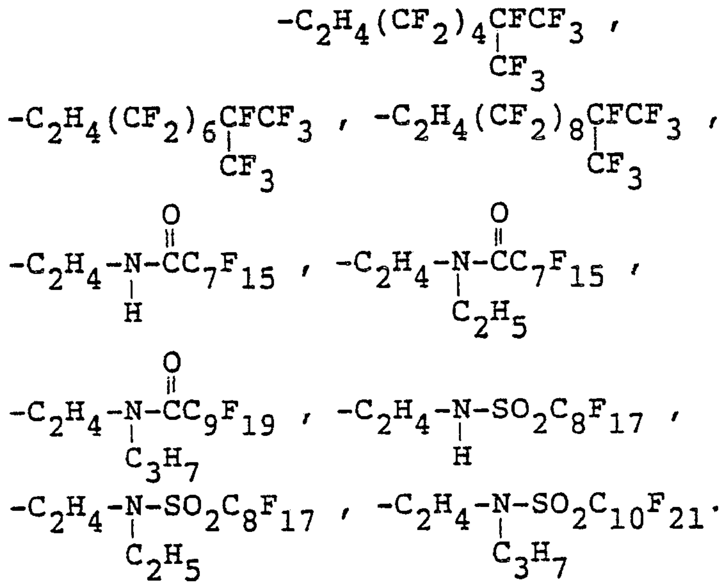

Where M is titanium, silicon or zirconium, m + n is 4, and n is 1, 2, 3 or 4. Where M is aluminum, m + n is 3, and n is 1, 2 or 3.

Particular compounds represented by the formula [I] wherein M is silicon include, for example, silicate compounds represented by the following formulae.

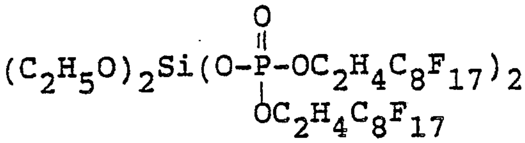
,

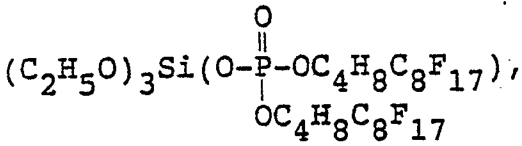
,

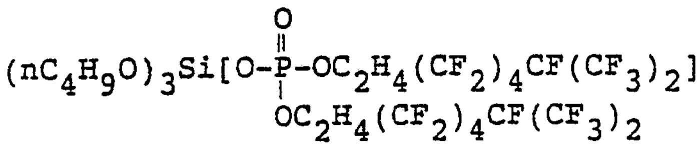
,

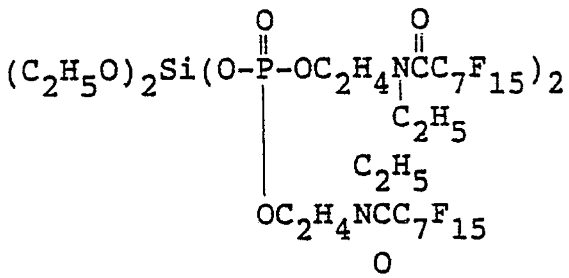
,

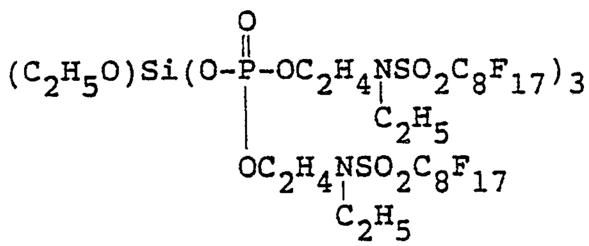
,

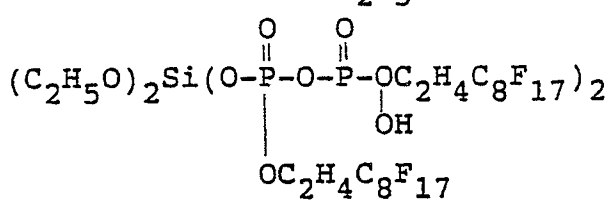
,

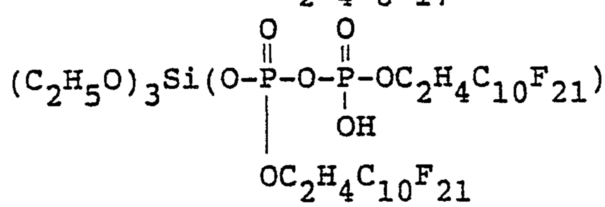
,

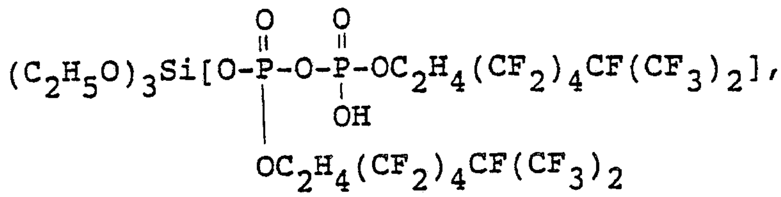

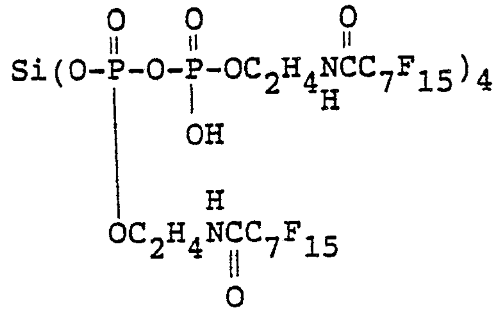

, and

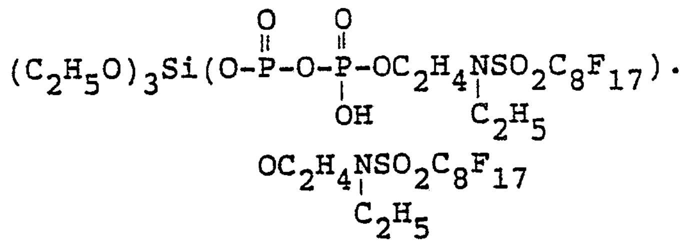

Particular compounds represented by the formula [I] wherein M is aluminum, include aluminate compounds represented by the following formulae:

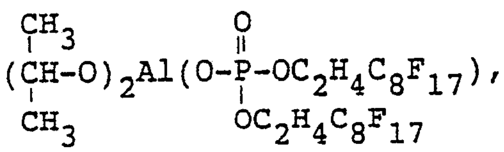

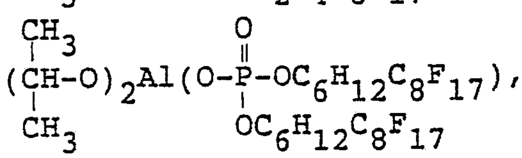

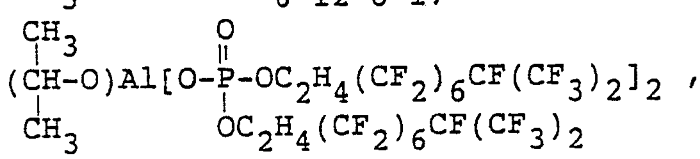

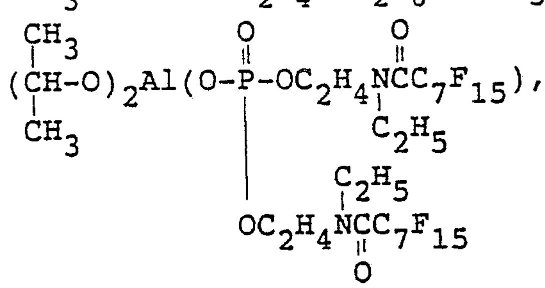

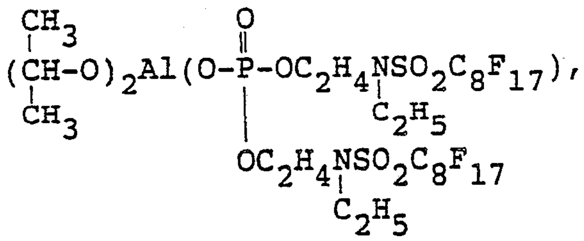

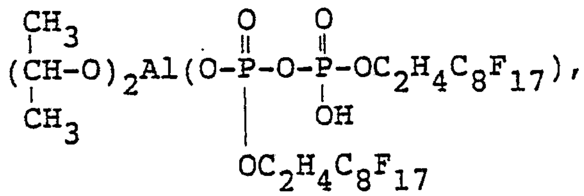

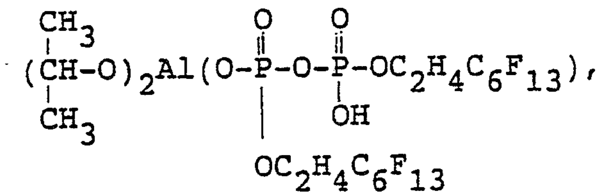

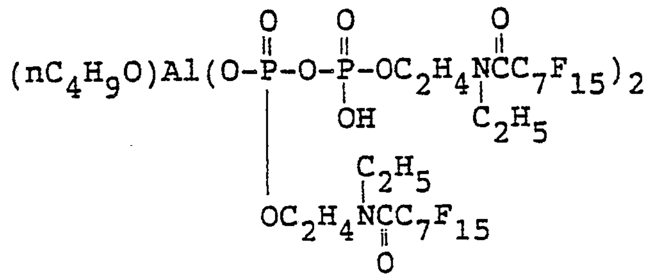

, and

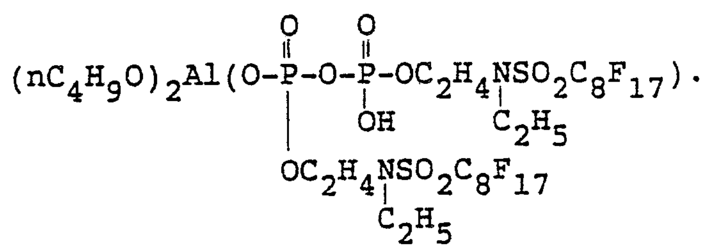

Particular compounds represented by the formula [I] wherein M is zirconium include zirconate compounds represented by the following formulae:

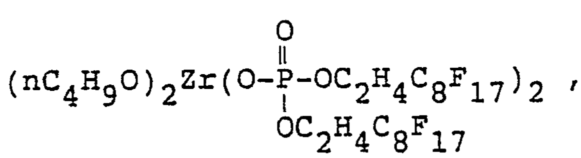

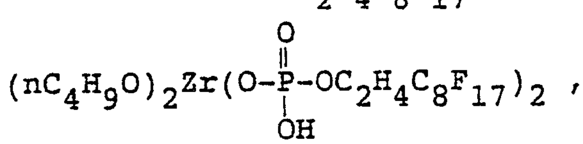

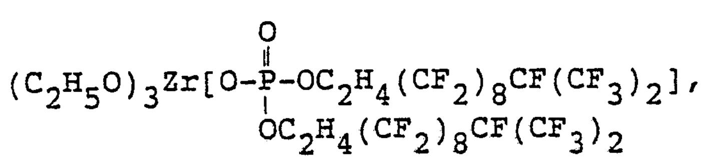

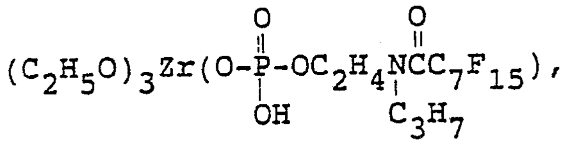

,

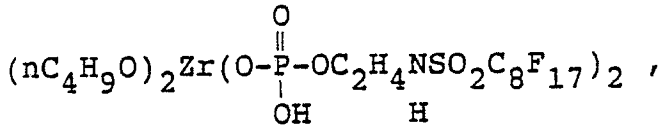

,

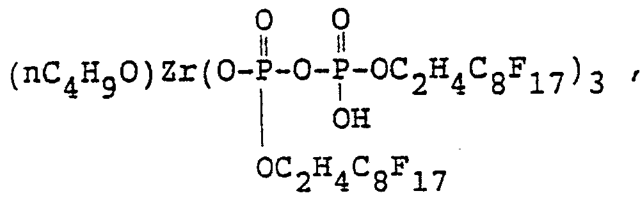

,

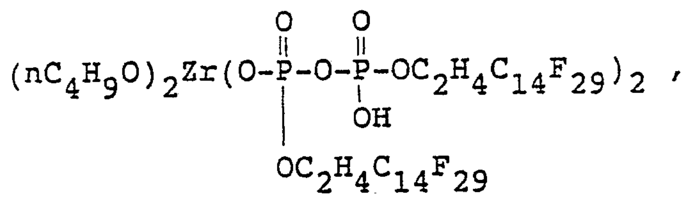

,

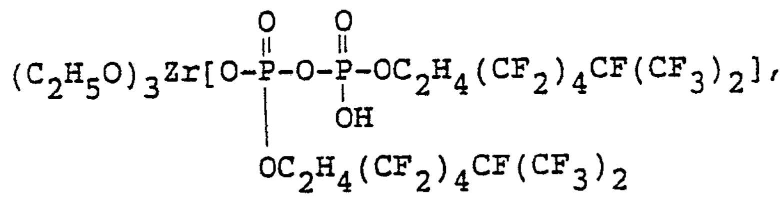

,

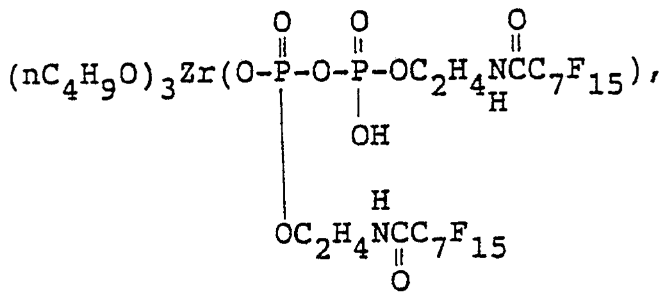

, and

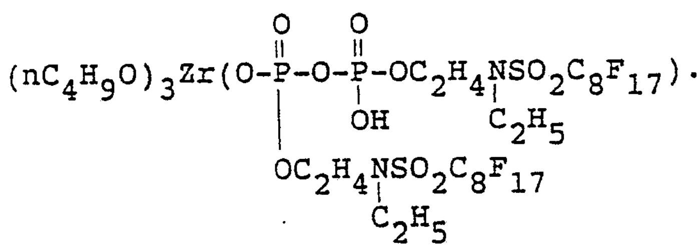

.

Particular compounds represented by the formula [I] wherein M is titanium include titanate compounds represented by the following formulae:

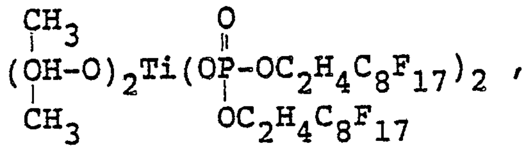

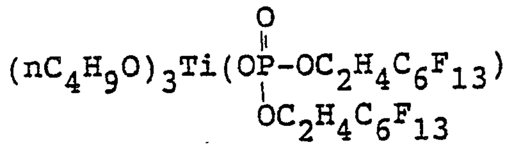

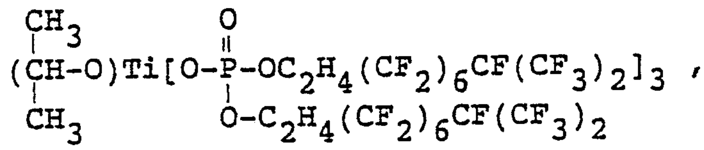

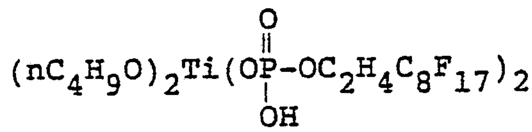

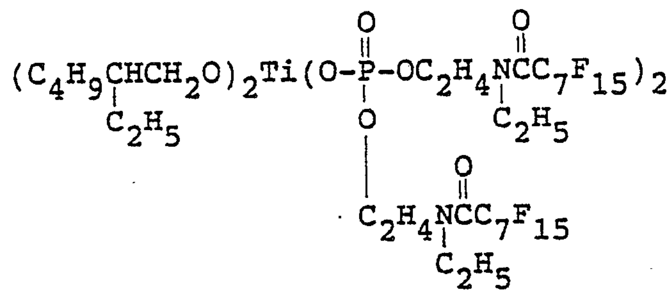

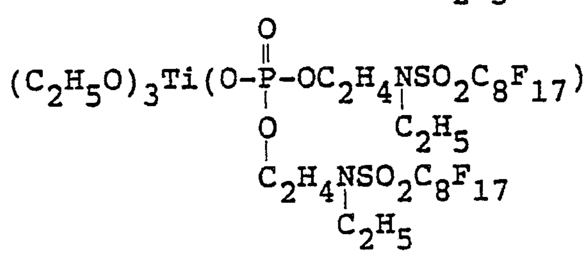

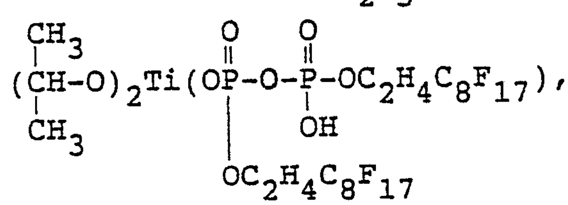

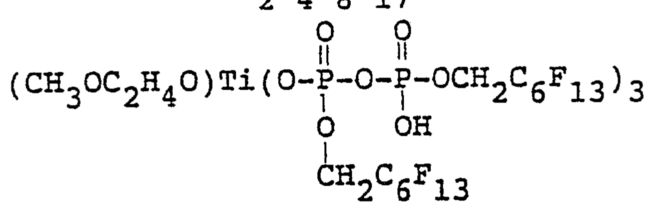

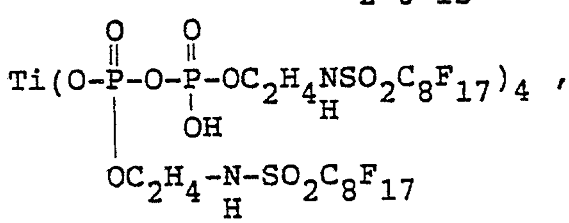

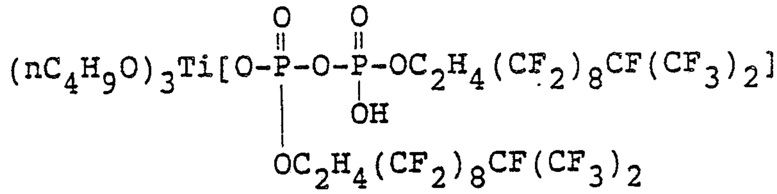

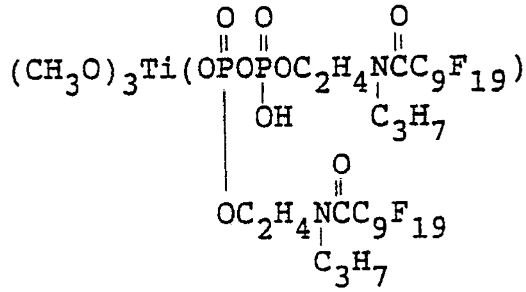

According to the second embodiment, the present compounds are represented by the following general formula [II]:

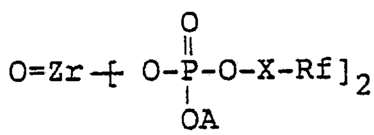

[II]

In this formula, A, X, and Rf have the same meanings as defined for the formula [I].

Particular compounds represented by the formula [II] are, for example, as follows:

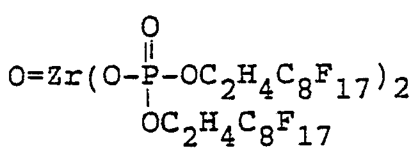
,

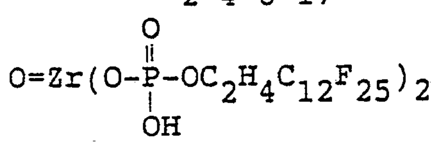
,

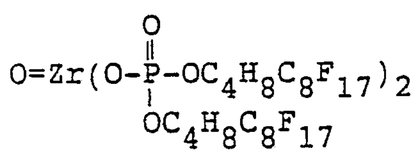
,

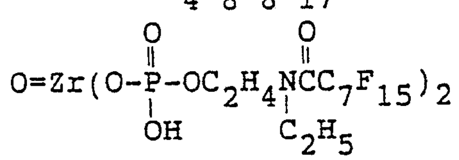
,

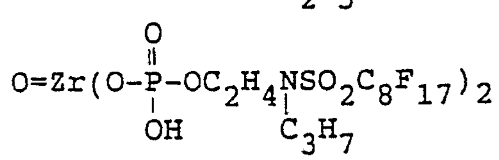
,

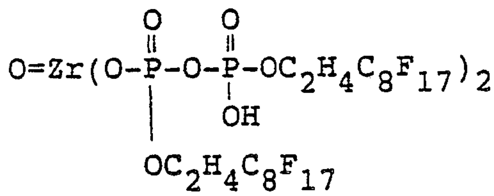

, and

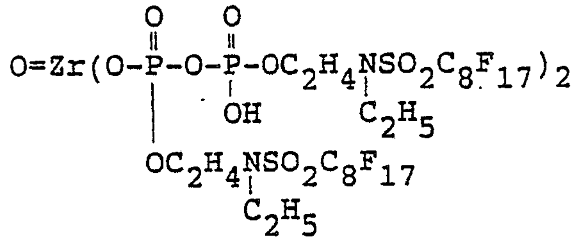

According to the third embodiment, the present compounds are represented by the following general formula [III]:

$O=Zr[O-\overset{O}{\overset{\|}{C}}-Rf]_2$

In this formula, Rf has the same meaning as defined for the formula [I].

Particular compounds represented by the formula [III] are, for example, as follows.

$O=Zr(O\overset{O}{\overset{\|}{C}}C_7F_{15})_2$ , $O=Zr(O\overset{O}{\overset{\|}{C}}C_9F_{19})_2$ ,

$O=Zr(O\overset{O}{\overset{\|}{C}}C_{11}F_{23})_2$ ,

$O=Zr[O\overset{O}{\overset{\|}{C}}(CF_2)_6CF(CF_3)_2]_2$ , and

$O=Zr[O\overset{O}{\overset{\|}{C}}(CF_2)_8CF(CF_3)_2]_2$.

A compound represented by the formula [I] can be produced by reacting a corresponding M alkoxide with a polyfluoroalkylphosphate ester or polyfluoroalkylpyrophosphate ester, according to the following reactions [RI] and [RII].

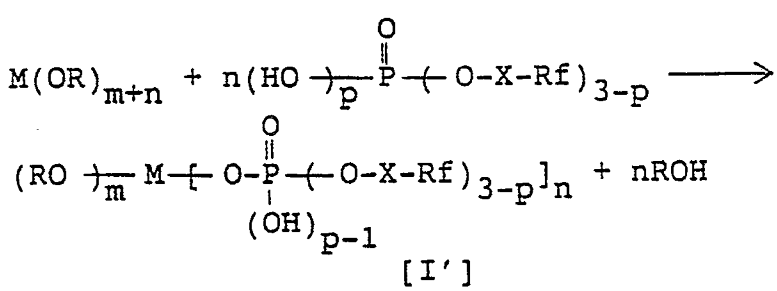

[RI]

[I']

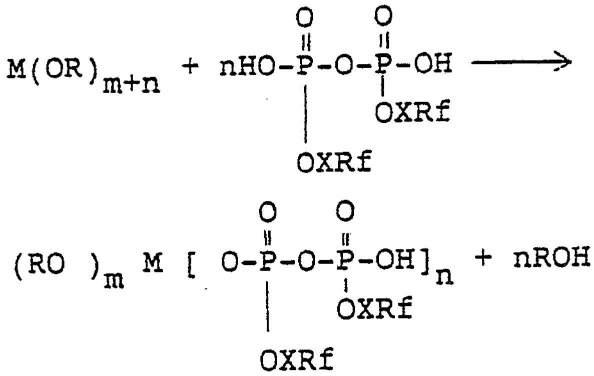

[RII]

[I"]

wherein, p is an integer of 1 or 2, and M, m, n, R, X and Rf have the same meanings as defined for formula [I]. The formulas [I′] and [II′] are embodiments of the formula [I].

The above-mentioned reaction can be carried out without a solvent or in a solvent. The solvent can be any solvent which does not react with the alkoxide and polyfluoroalkylphosphate ester or polyfluoroalkylpyrophosphate ester, and dissolves said reactants, and preferably is a lower alcohol such as ethanol or isopropanol, or a chloro-fluorocarbon such as trifluorotrichloroethane (Freon (RTM) 113), difluorotetrachloroethane (Freon (RTM) 112).

The reaction temperature is between a room temperature and 150° C, preferably between a room temperature and about 100° C.

The reaction time is between 10 minutes and 6 hours, preferably between 30 minutes and 4 hours.

Alcohol generated as the reaction proceeds can be distilled off to isolate a product, a metal compound of polyfluoroalkylphosphate ester or polyfluoroalkylpyrophosphate ester. Alternatively, the reaction mixture can be directly used to prepare a surface treating composition of the present invention.

The starting polyfluoroalkylphosphate ester can be produced by, for example, reacting a corresponding polyfluoroalkyl alcohol with phosphorus oxychloride according to a known process (Japanese Examined Patent Publication, KOKOKU No. 48-4770, and Japanese Examined Patent Publication, KOKOKU No. 40-6857), as follows:

$2RfXOH + POCl_3 \rightarrow POCl(OXRf)_2 + 2HCl$

$POCl(OXRf)_2 + H_2O \rightarrow PO(OH)(OXRf)_2 + HCl$

Polyfluoroalkylpyrophosphate ester as a starting material also can be produced in a manner similar to that described above, for example, by reacting polyfluoroalkyl alcohol with phosphorous pentaoxide, according to a known process (U.S. Patent No. 2947774).

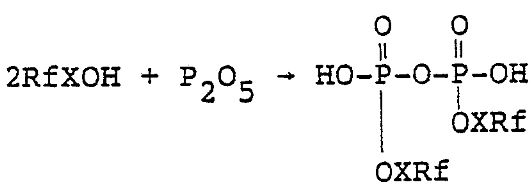

The present surface treating composition can comprise a condensation product of a metal compound of polyfluoroalkylpyrophosphate ester as the effective ingredient. The condensation products [A] and [B] can be produced by hydrolysis and condensation of the compound represented by the formula [I], according to the following reactions [RIII] and [RIV];

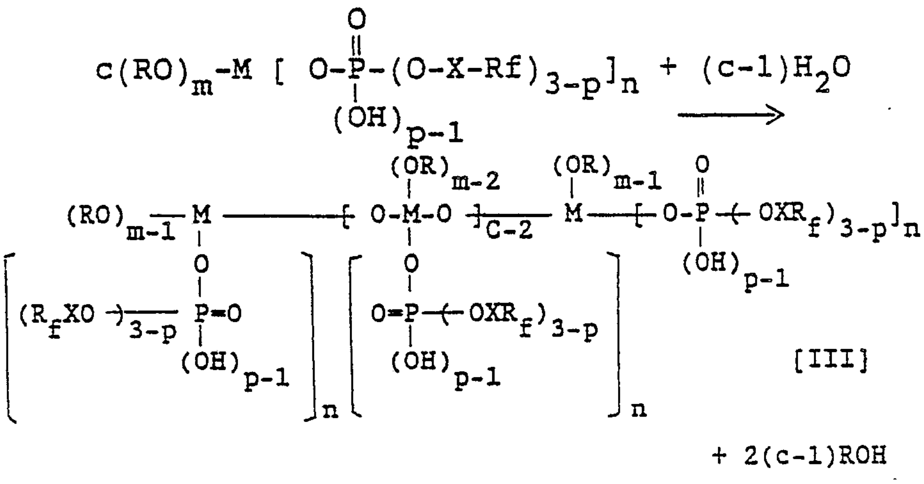


[III]

[A]

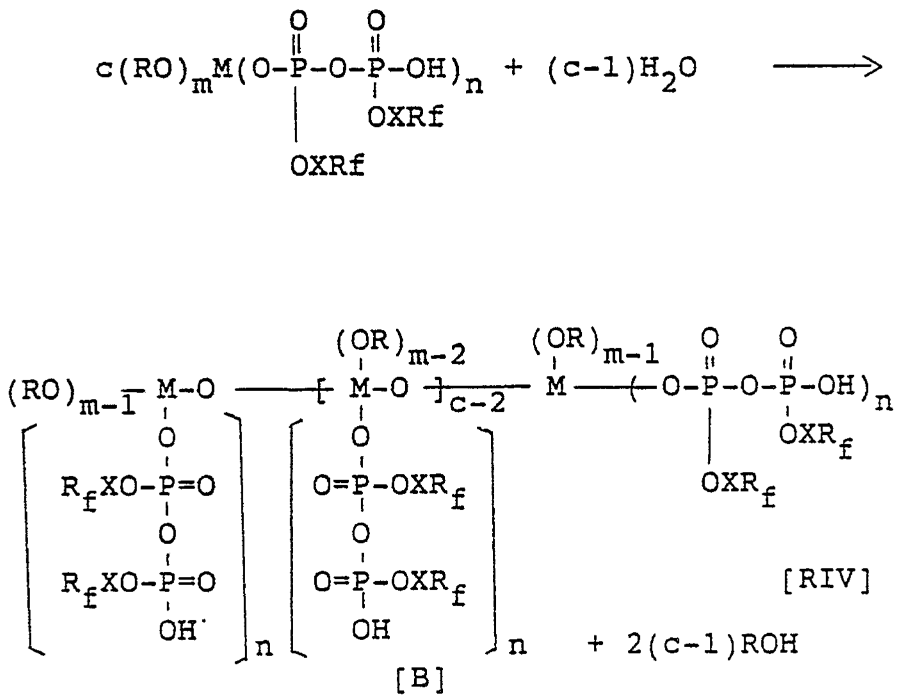


[RIV]

[B]

wherein c represents an integer selected according to an extent of condensation to provide a molecular weight of not more than about 10,000; p is an integer of 1 or 2; and other symbols have the same meaning as defined for the formula [I].

For the above-mentioned reaction, a metal compound of polyfluoroalkylphosphate ester or polyfluoroalkylpyrophosphate ester and water are dissolved in a mixed solvent consisting of a fluorochloro(hydro)carbon and an alkyl alcohol. As the fluorochloro(hydro)carbon solvent, Freon(RTM) 113, Freon(RTM) 122, benzotrifluoride and the like are used. As the alkyl alcohol solvent, ethanol, isopropanol, butanol and the like are used. A ratio of the fluorochlorohydrocarbon solvent and alkyl alcohol solvent is selected so that the mixed solvent can dissolve the metal compound of polyfluoroalkylphosphate ester or polyfluoroalkylpyrophosphate ester used.

An amount of water used for the reaction is preferably at most one equivalent relating to the metal ion. An excess amount of water is not preferable because it may cause white precipitation and elimination of the polyfluoroalkylphosphate ester or polyfluoroalkylpyrophosphate ester. The condensation temperature is preferably between a room temperature and 150 °C, and the condensation time is preferably between 30 minutes and 6 hours.

Alternatively, the condensation product of the present invention can be produced by first condensing a metal alkoxide with the addition of water, followed by the addition of polyfluoroalkylphosphate ester or polyfluoroalkylpyrophosphate ester, according to the following reactions [RV], and [RVI] or [RVII].

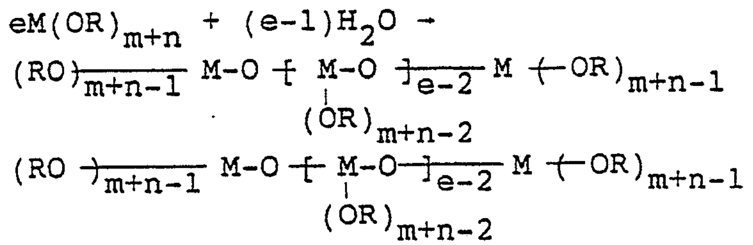

[RV]

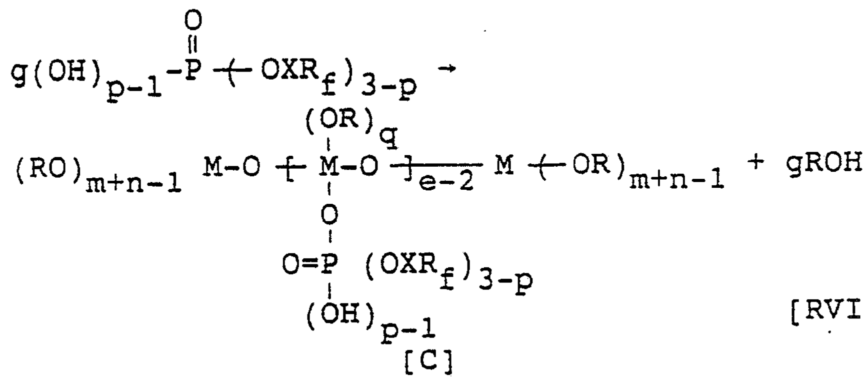

[RVI]

[C]

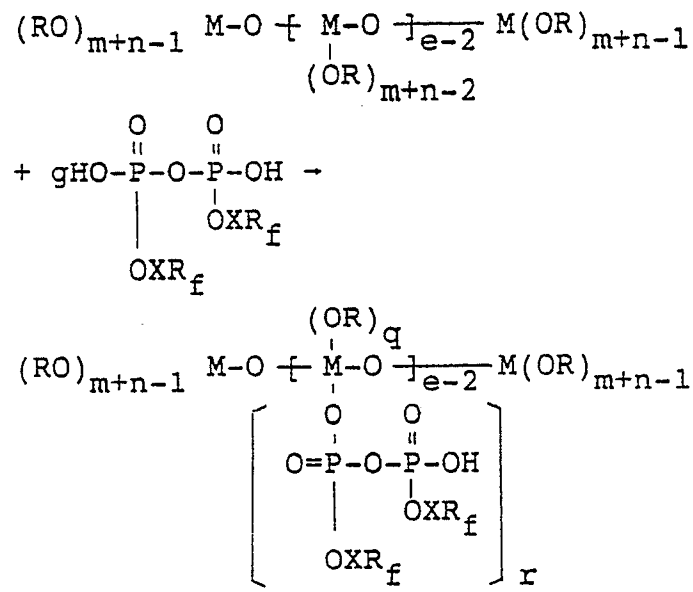

[RVII]

[D]

wherein e represents an integer selected according to an extent of condensation to provide a molecular weight of not more than about 10,000; g represents an integer between 0 and m+n-2; g+r = m+n-2; p represents an integer of 1 or 2; and other symbols have the same meanings as defined for the fornula [I].

The above-mentioned condensation reaction [RV] can be carried out by various known processes. The reaction gradually proceeds at a room temperature only by the addition of water to a starting metal alkoxide. Excess condensation is not preferable because it results in gelation of the reaction product, which makes the product difficult to dissolve in various solvents, and a low extent of the condensation is preferable for the present invention.

For the reactions [RVI] and [RVII], polyfluoroalkylphosphate ester or polyfluoroalkylpyrophosphate ester is added to the condensation product of metal alkoxide, and the reactions are carried out under the same conditions as described above for the reactions [RIII] and [RIV].

The molecular weight of the above condensation products is preferably not more than about 10,000, as a higher molecular weight may cause difficulty in the dissolving of the condensation products in various solvents.

A compound represented by the general formula [II] can be produced, for example, by reacting zirconyl salt such as zirconyl chloride, zirconyl sulfate, zirconyl nitrate or the like, in an aqueous solution with alkaline metal carbonate to form a zirconyl carbonate precipitate, which is then reacted with polyfluoroalkylphosphate ester or polyfluoroalkylpyrophosphate ester, according to the following reactions [RVIII], and [RIX] or [RX].

$ZrOCl_2 \cdot 8H_2O + Na_2CO_3 \rightarrow ZrOCO_3 + 2NaCl + 8H_2O$ [RVIII]

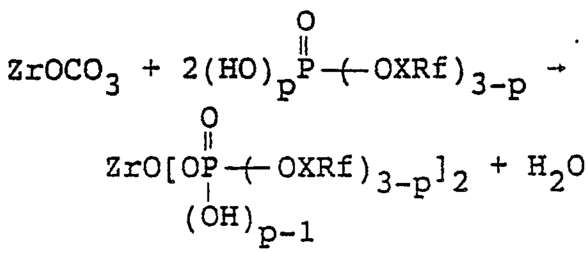

[RIX]

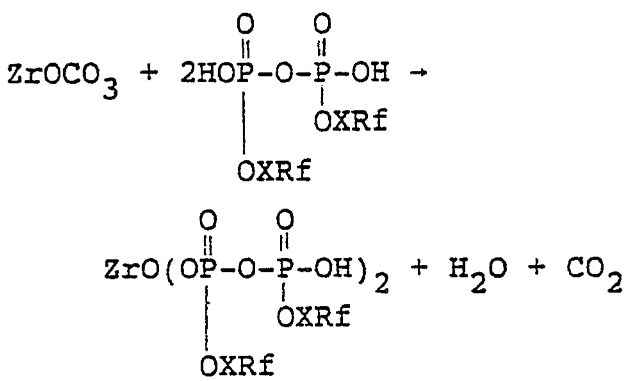

[RX]

wherein p is an integer of 1 or 2, and the other symbols have the same meanings as defined for the formula [I].

The reaction [RVIII] for the formation of zirconyl carbonate is well known as a process for the production of zirconium soap, wherein an equivalent amount of an alkaline metal carbonate such as sodium carbonate or potassium carbonate is added to an aqueous solution of zirconyl salt to form a precipitate, which is then washed with water to obtain a zirconyl precipitate excluding the starting zirconyl salt. To carry out the reaction [RIX] or [RX], two equivalents of polyfluoroalkylphosphate ester or polyfluoroalkylpyrophosphate ester, respectively, are added to this wet precipitate comprising zirconyl carbonate.

The reaction temperature is between a room temperature and 150 °C, preferably between 60 °C and 100 °C, and the reaction time is between 30 minutes and 4 hours, usually about one hour.

After the reaction, the resulting reaction mixture is cooled and diluted with an appropriate solvent such as a halogenated hydrocarbon such as fluorinated hydrocarbon solvent or a chlorohydrocarbon solvent, and the diluted mixture is washed with water and concentrated to obtain the desired product.

A compound represented by the general formula [III] can be produced by, for example, reacting zirconium carbonate prepared according to the above reaction [RVIII] with polyfluoroalkyl carboxylic acid, according to the following reaction [RXI]:

$ZrOCO_3 + 2RfCO_2H \rightarrow ZrO(RfCO_2)_2 + H_2O + CO_2$ [RXI]

The reaction conditions and process for the recovery of the reaction product are substantially the same as those described for the reactions [RIX] and [RX].

A surface treating agent of the present invention contains any one of the above compounds represented by the general formula [I] to [III] and the above condensation products represented by the general formula [A] to [D]. Alternatively, the surface treating composition can contain any combination of the above products. Moreover, the surface treating composition can contain, in addition to the above product or combination thereof, starting materials remaining unreacted during the reaction.

The present surface treating composition is usually used in a form diluted with a conventional solvent. The solvent is preferably a fluorocarbon type solvent such as trifluorotrichloroethane (Freon(RTM) 113), difluorotetrachloroethane (Freon(RTM) 112) or benzotrifluoride, or a chlorocarbon type solvent such as trichloroethylene, or a mixture thereof with a lower alcohol. Especially, fluorocarbon type solvent such as trifluorotrichloroethane (Freon(RTM) 113) and a mixture of Freon(RTM) 113 and a lower alcohol are preferable, as they have a high solubility for the present surface treating composition. Moreover, depending on the

application, additives such as surfactants, and leveling agents and the like may be added to the surface treating composition.

When treating a surface of a substrate with the present surface treating composition, a concentration of an effective ingredient, i.e., the above product, is preferably 0.005% to 10% by weight. A lower concentration provides a thin film having a poor water-repellency and poor oil-repellency, and at a concentration higher than 10% by weight, the increased concentration does not improve the water-repellency or oil-repellency, but results in a worsened evenness and easier peeling of the formed film. Accordingly, from the economical and practical viewpoints, a concentration of between 0.05% and 1% by weight is preferable.

Conventional treating methods may be used, such as brushing, spraying, roll coating, dip coating, and spin coating.

Although the film formation can be carried out at a room temperature, the film formation speed can be controlled by changing the temperature.

The thickness of a coating can be intentionally changed by controlling the concentration of the ingredient in a coating composition, the pickup velocity in the dip coating process, the rotation rate in the spin coating process, and the like. The thickness can be changed over a range of from several angstroms to several µm.

The present surface treating compositions are applied to various fields in which the low surface energy properties of fluorocompounds are used, as exemplified as follows:

## Field using water- and oil-repellencies

The present compositions provide water- and oil-repellencies and a stain resistance to a surface of a substrate, and can be applied to a fibrous, porous or continuous surface of the various substrates, such as woven cloths, clothing, furniture, cloth covers, floor cloths, paper bags, cardboard containers, trunks, handbags, shoes, jackets, boarding made of wood or asbestos, bricks, concrete, floors, wall tiles, and the like.

Moreover, the present surface treating composition may be used for the treatment of surfaces of glass, stone, wood, plaster, paper, and coated or uncoated metal surface.

## Field using low adhesion of exposed surface

The present surface treating composition can be used as release agent for plastics and the like, anti-icing agent for aircraft and the like, and anti-stick agent for frying pans, which require a good adhesion to a metal substrate such as iron, stainless steel, aluminum, duralumin and the like, and a low adhesion of the exposed surface.

## Field using lubricating properties

The present surface treating compositions can be used as a solid surface lubricating agent for magnetic memory materials such as magnetic tapes used as audio, video or digital memories, floppy disks, hard disks, or the like, which require a good adhesion to metal, carbon or some plastics, low surface frictional properties, and good lubricating properties.

As described above, the surface treating compositions according to the present invention can form a film having a good adhesion to a surface of substrates such as metals, for example, nickel, aluminum, copper, iron, and stainless steel; non-metallic inorganic materials, for example, glass and ceramics; plastics, for example, polyurethane, ABS resin, and polyvinyl chloride; as well as other organic materials, for example, wood and cloth, to provide the low surface energy properties of a fluorine-containing alkyl group, i.e., water- and oil-repellencies, anti-stain properties, non-cohesive properties of exposed surface, lubrication properties and the like, to the treated surface of the substrates.

## Examples

The present invention will now be further illustrated by, but is by no means limited to, the following examples.

Example 1

A mixture was formed of 28.4 g of tetraisopropyltitanate $Ti(OiPr)_4$ and 182 g of polyfluorophosphate ester which is a mixture of monoester:

$(HO)_2 P(=O) OC_2H_4C_8F_{17}$

and diester:

$HO P(=O) (OC_2H_4C_8F_{17})_2$

and has an average composition:

$(HO)_{1.18} P(=O) (OC_2H_4C_8F_{17})_{1.82}$ ,

and the mixture was heated at 60 °C for 30 minutes while stirring. Next, the reaction mixture was evaporated under a reduced pressure, to a constant weight, to obtain a desired product of the following composition.

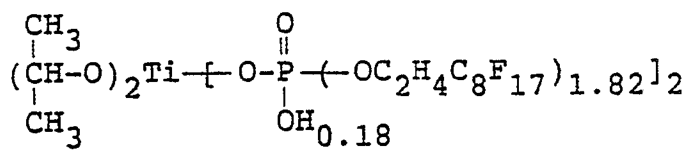

Example 2

A mixture was formed of 142 g of phosphorus pentoxide $P_2O_5$ and 928 g of polyfluoroalcohol $C_8F_{17}C_2H_4OH$, and the mixture was heated at 100 °C for one hour and at 140 °C for 3 hours to obtain a polyfluoroalkylpyrophosphate ester. Then 17.0 g of tetrabutyl titanate $Ti(OBu)_4$ and 100 g of Freon 113 were mixed, and to the mixture was dropwise added a mixture of 107 g of the above-synthesized polyfluoroalkylpyrophosphate ester and 100 g of isopropanol at a room temperature for 30 minutes. The mixture was heated at 60 °C for 30 minutes, and evaporated under a reduced pressure at the same temperature, to a constant weight, to obtain a desired product having the following formula.

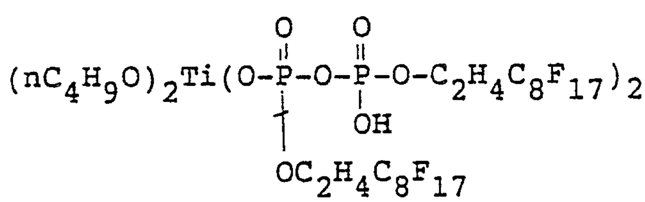

Example 3

To 8.2 g of oligomer of tetrabutyltitanate having an average composition $Ti_4O_3(OC_4H_9)_8$ was added 40 g of a mixture of polyfluoroalkylphosphate esters having an average composition:

$(C_\ell F_{2\ell+1}C_2H_4O)_{1.84} P(=O)OH_{1.16}$

wherein $\ell$ is 6, 8, 10 or 12 with an average of $\ell$ being 9, the mixture was heated at 80 °C for 30 minutes, and the reaction mixture was evaporated under a reduced pressure at the same temperature, to a constant weight, to obtain a desired product having the following average composition.

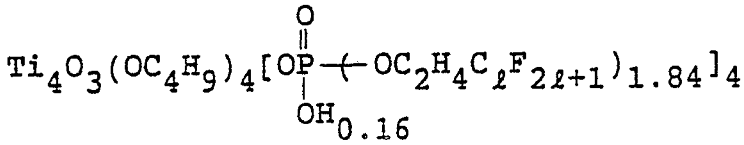

Example 4

A mixture was formed of 10.5 g of ethyl silicate and 44.4 g of polyfluoroalkylphosphate ester:

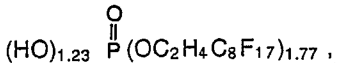

the mixture was heated at 80 °C for 30 minutes, and then evaporated under a reduced pressure at the same temperature, to a constant weight, to obtain a desired product of the following formula.

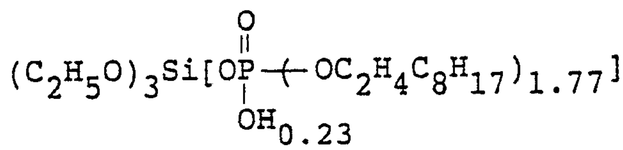

Example 5

A mixture was formed of 10.5 g of ethyl silicate and 64.2 g of polyfluoroalkylpyrophosphate ester:

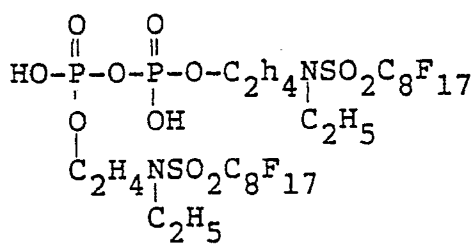

the mixture was heated at 80 °C for 30 minutes, and then evaporated under a reduced pressure at the same temperature, to a constant weight, to obtain a desired product of the following formula.

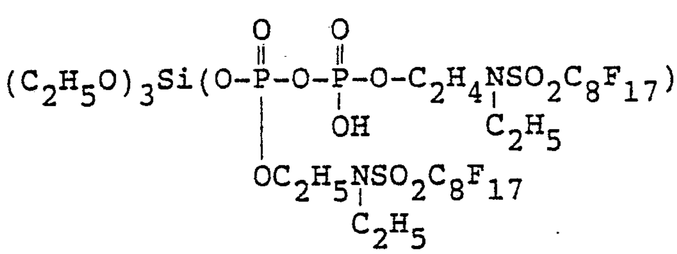

Example 6

A mixture was formed of 10 g of a condensation product of ethyl silicate, containing 41.0% $SiO_2$ , and 40 g of polyfluoroalkyl phosphate ester:

$(HO)_{1.5}\overset{O}{P}(OC_2H_4C_6F_{13})_{1.5}$,
the mixture was heated at 80° C for 30 minutes, and then evaporated under a reduced pressure at the same temperature, to a constant weight, to obtain a desired product having the following average composition.

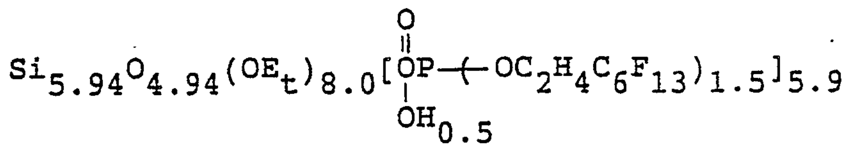

## Example 7

A solution was formed by dissolving 4.1 g of aluminum isopropoxide in 40 ml of methyl chloroform, and to the solution was gradually added a solution of polyfluoropyrophosphate ester:

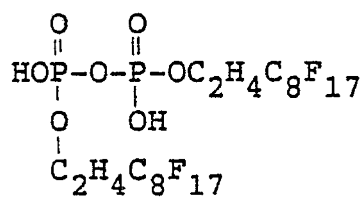

dissolved in 30 ml of isopropanol, and the mixture was heated at 60° C for one hour and then evaporated under a reduced pressure at the same temperature to obtain a desired product of the following formula.

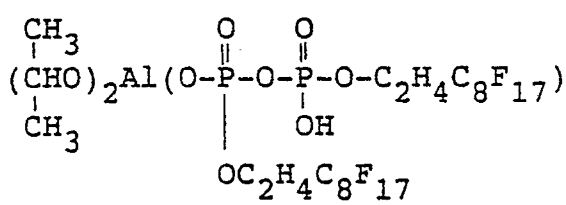

## Example 8

A solution was formed by dissolving 4.1 g of aluminum isopropoxide in 40 ml of methyl chloroform, and to the solution was gradually added a solution of 42 g of polyfluoropyrophosphate ester:

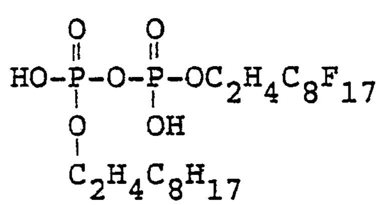

dissolved in 60 ml of isopropanol. The mixture was heated at 60° C for one hour, and then evaporated under a reduced pressure at the same temperature, to a constant weight, to obtain a desired product of the following formula.

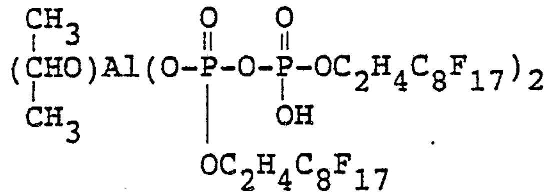

Example 9

To a mixture of 50 ml of isopropanol and 30 ml of Freon 113 was added 10 g of the aluminate synthesized in Example 7, 0.18 g of water was added to the mixture, and the mixture was refluxed for 5 hours. Next, isopropanol and Freon 113 were distilled off under a reduced pressure to obtain a condensation product having the following average composition.

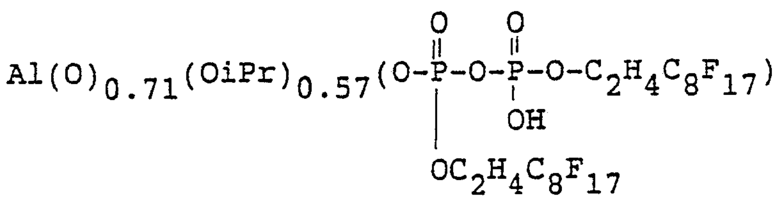

Example 10

To 10 g of zirconium tetrabutoxide $Zr(OBu)_4$ was added 50 g of polyfluoroalkylphosphate ester:

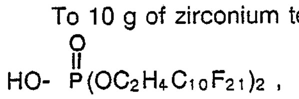

and the mixture was heated at 95 °C for one hour. Next, the reaction mixture was evaporated under a reduced pressure at the same temperature to obtain a desired product of the following formula.

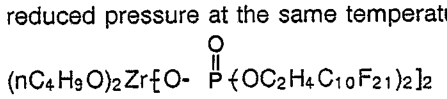

Example 11

To 10 g of zirconium tetrabutoxide, was added 25 g of polyfluoroalkylphosphate ester:

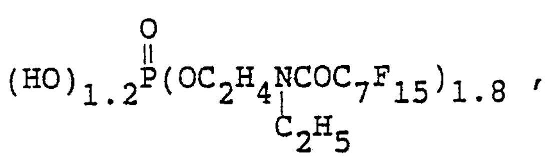

and the mixture was heated at 95 °C for one hour. Next, the reaction mixture was evaporatd under a reduced pressure at the same temperature to obtain a desired product of the following formula.

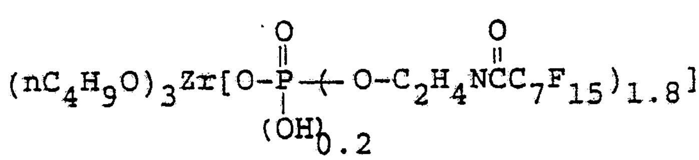

Example 12

To 100 g of Freon 113, was added 20 g of the zirconate obtained in Example 10 and to the mixture was dropwise added a mixed solution of 20 g of isopropanol and 0.15 g of water at a room temperature for 30 minutes while stirring. After the reaction mixture was refluxed for 4 hours, almost all of the solvent was distilled off under normal pressure, and then under a reduced pressure at 110 °C, to obtain a condensation product having the following average composition.

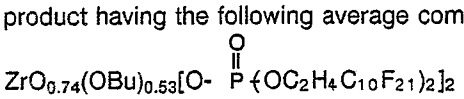

Example 13

To an aqueous solution of 16.1 g of zirconyl chloride $ZrOCl_2 \cdot 8H_2O$ dissolved in 250 ml of water was gradually added an aqueous solution of 5.8 g of sodium carbonate dissolved in 50 ml of water. The resulting precipitate was filtered off and thoroughly washed with water. To a wet cake thus obtained was added 100 ml of ethanol to form a gel, and to the gel was gradually added a solution of 86.2 g of polyfluoroalkylphosphate ester:

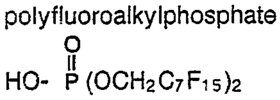

dissolved in 100 ml of isopropanol. The mixture was heated at 80 °C for one hour, and after cooling, 200 g of Freon 113 and 300 ml of water were added to the mixture, which was then stirred and phase-separated, and the lower phase was concentrated under a reduced pressure to obtain a desired product of the following formula.

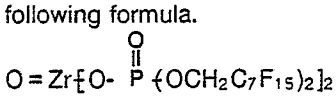

Example 14

A wet cake of zirconyl carbonate was prepared from 16.1 g of zirconyl chloride by the same procedure as described in Example 13, and to the cake was added 100 ml of ethanol to form a gel. To this gel was gradually added a solution of 107 g polyfluoroalkylpyrophosphate ester:

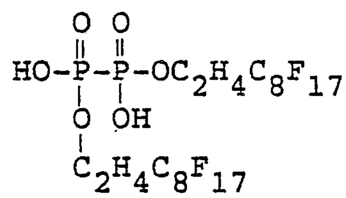

dissolved in 100 ml of isopropanol, the resulting mixture was heated at 80 °C for one hour, and after cooling, 400 g of Freon and 300 ml of water were added to the mixture, which was then stirred and phase-separated. The lower phase was concentrated under a reduced pressure to obtain a desired product of the following formula.

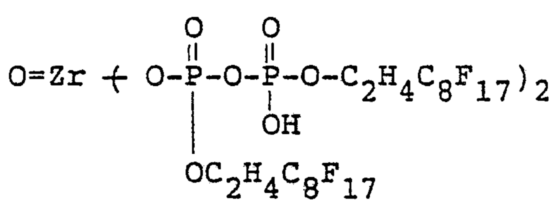

Example 15

A wet cake of zirconyl carbonate was prepared from 32.2 g of zirconyl chloride by the same procedure as described in Example 13. To this cake was added 83 g of perfluorocarboxylic acid $C_7H_{15}COOH$, and the mixture was thoroughly stirred and heated at 80 °C for one hour. After cooling to a room temperature, 200 g of Freon 113, 100 g of ethanol and 300 ml of water were added to the mixture, which was then stirred and phase-separated, and the lower phase was concentrated under a reduced pressure to obtain a desired product of the following formula.

$$O=Zr\{O-\overset{\overset{O}{\|}}{C}-C_7F_{15})_2$$

Example 16 Water-repellent test

A 0.2% solution of each product prepared in the preceding Examples 1 to 14 in a mixed solvent of 90% by weight Freon 113 and 10% by weight ethanol was prepared. A stainless steel (SUS 304) plate or glass plate was dipped in the solution for 3 minutes, and the plate was dried at 150 °C for 15 minutes and the contact angle to water was measured. As a control, polyfluoroalkylphosphate ester:

$$(HO)_{1.18}\overset{\overset{O}{\|}}{P}(OC_2H_4C_8F_{17})_{1.82}$$

was used.

The results are shown in Table 1.

Table 1

| Example No. | Contact angle to water | |
|---|---|---|
| | Stainless steel | Glass plate |
| 1 | 115.7° | 112.4° |
| 2 | 114.1° | 112.1° |
| 3 | 113.5° | 111.7° |
| 4 | 110.7° | 109.2° |
| 5 | 110.3° | 108.5° |
| 6 | 105.1° | 104.3° |
| 7 | 114.0° | 100.2° |
| 8 | 114.4° | 100.3° |
| 9 | 114.1° | 100.6° |
| 10 | 112.3° | 109.7° |
| 11 | 111.5° | 108.4° |
| 12 | 107.8° | 106.1° |
| 13 | 118.7° | 102.7° |
| 14 | 114.4° | 102.5° |
| 15 | 105.0° | 101.3° |
| Control | 101.5° | 52.1° |
| Blank | 75.2° | < 10 |

As seen from Table 1, the present fluorine-containing surface treating compositions adhere to the surface of stainless steel and glass and provide an excellent water-repellency.

Example 17 Releasing test

First, 10 g of resin for elastomer (Coronate 4090; Nippon Urethane) and 1.27 g of curing agent (methylene- bis(o-chloroaniline) were separately melted and then mixed together. Further, the inside of an aluminum cup having an inner diameter of 37 mm and a height of 45 mm was coated with a solution of 0.2% of the product prepared in the preceding Examples in a mixed solvent of 90% Freon 113 and 10% ethanol by weight, and the cup was heated to 80 °C. Next, the above-prepared melt was poured into the

cup, and a metal grip was inserted into the melt. The grip comprised a 70 mm bar having one bent end and another end attached to a circular plate having a diameter of 30 mm. The melt was allowed to cure at 120 °C for one hour. After completion of the curing, the grip was pulled to assess the releasing property, which was graded according to the following criteria:

◎ : The cured resin can be pulled off by a force of not more than 2 kg.
o : The cured resin can be pulled off by a force of 2 to 10 kg.
x : The cured resin cannot be pulled off by a force of 10 kg.

The results are shown in Table 2.

Table 2

| Example No. | 1 | 2 | 3 | 4 | 5 | 6 | 7 | 8 |
|---|---|---|---|---|---|---|---|---|
| Rating | ◎ | ◎ | ◎ | ◎ | ◎ | o | ◎ | ◎ |
| Example No. | 9 | 10 | 11 | 12 | 13 | 14 | 15 | Blank |
| Rating | ◎ | ◎ | ◎ | ◎ | ◎ | ◎ | ◎ | x |

As seen from Table 2, all the present surface treating compositions provided excellent releasing properties.

## Example 18

A 0.1% solution of the products prepared in the preceding Examples in a mixed solvent of Freon 90% and ethanol 10% by weight, and a nickel-plated aluminum plate was coated with the solution by dip coating, and the dynamic coefficient of the coated metal plate was measured by using a surface property tester (HEIDON-14D, load 10 g, SUS bowl 10 mm diameter, moving velocity 300 mm/min).

The results are shown in Table 3.

Table 3

| Example No. | 1 | 2 | 3 | 4 | 5 | 6 | 7 |
|---|---|---|---|---|---|---|---|
| Dynamic coefficient of friction | 0.15 | 0.16 | 0.16 | 0.17 | 0.17 | 0.18 | 0.15 |
| Example No. | 8 | 9 | 10 | 11 | 12 | 13 | 14 |
| Dynamic coefficient of friction | 0.14 | 0.16 | 0.12 | 0.15 | 0.17 | 0.15 | 0.16 |
| Example No. | 15 | blank | | | | | |
| Dynamic coefficient of friction | 0.18 | 0.45 | | | | | |

## Example 19

A 0.5% solution of the product obtained in the preceding Examples in a mixed solvent of 90% Freon 113 and 10% ethanol by weight was prepared, and a polyester woven cloth was dipped in the solution, and the dipped cloth was dried in air. After heating at 100 °C for 15 minutes, the water-repellency and oil-repellency of the cloth was assessed according to the AATCC test method 22-1952 and AATCC test method TM118-1966 respectively. As a control, the polyfluoroalkylphosphate ester in Example 16 was used.

The results are shown in Table 4.

Table 4

| Example No. | 1 | 2 | 3 | 4 | 5 | 6 | 7 |
|---|---|---|---|---|---|---|---|
| Water-repellency<br>Oil-repellency | 100<br>8 | 100<br>8 | 100<br>8 | 90<br>6 | 90<br>6 | 90<br>6 | 70<br>6 |
| Example No. | 8 | 9 | 10 | 11 | 12 | 13 | 14 |
| Water-repellency<br>Oil-repellency | 70<br>6 | 70<br>6 | 90<br>7 | 90<br>7 | 90<br>7 | 80<br>6 | 80<br>6 |
| Example No. | 15 | Control | | | | | |
| Water-repellency<br>Oil-repellency | 80<br>6 | 50<br>6 | | | | | |

As seen from Table 4, all of the present surface treating compositions exhibited an excellent water-repellency compared to the control, and some of the present surface treating compositions showed a better oil-repellency than the control.

## Claims

1. A surface treating agent comprising as an essential ingredient a metal compound represented by the formula [I], [II], [III], [A], [B], [C] or [D]:

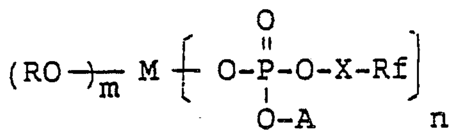

[I]

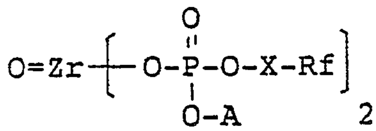

[II]

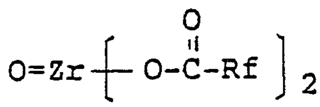

[III]

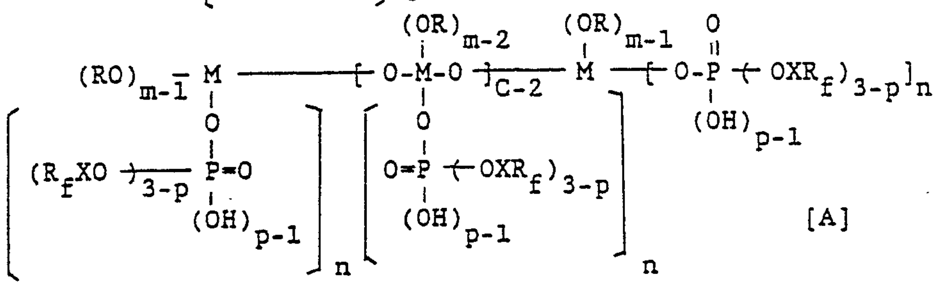

[A]

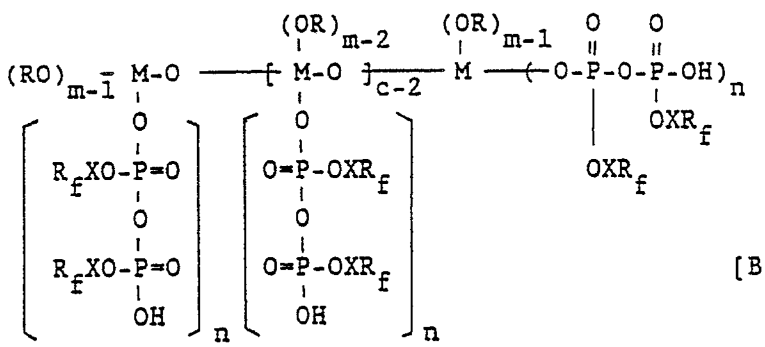

[B]

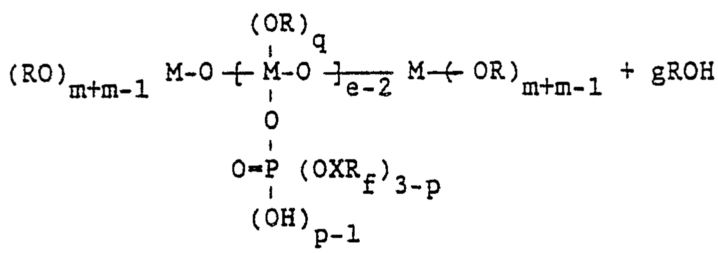

[C]

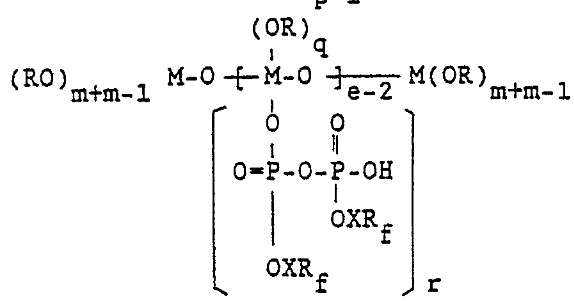

[D]

wherein M represents a metal atom selected from the group consisting of titanium, silicon, aluminum and zirconium;
A represents a hydrogen atom,

$-X-Rf$, or 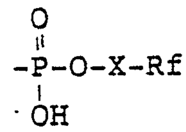;

X represents a radical selected from the group consisting of $-R'-$, $-R'-N(R'')-CO-$, and $-R'-N(R'')-SO_2-$,

wherein $R'$ represents an alkylene group having 1 to 8 carbon atoms and $R''$ represents an alkyl group having 1 to 4 carbon atoms;

Rf represents a perfluoroalkyl group having 4 to 20 carbon atoms;

R represents a radical selected from the group consisting of alkyl groups having 1 to 8 carbon atoms and alkoxy-substituted alkyl groups having 2 to 8 carbon atoms;

m and n represent integers wherein the sum of m and n corresponds to the valence of the metal M under the condition $1 \leqq n \leqq M$;

p is an integer of 1 or 2;

c and e are selected according to an extent of condensation to provide a molecular weight of not more than about 10,000;

g is an integer between 0 and $m+n-2$; and

$q+r = m+n-2$.